# EUROPEAN PATENT APPLICATION

(11) **EP 4 325 670 A1**
(43) Date of publication of application: **21.02.2024**
(21) Application number: 23191622.2
(22) Date of filing: 16.08.2023
(51) Int. Cl.: H01R 11/28, H01R 13/6585, H01R 13/6593, H01R 4/34

(54) **ELECTRICAL HIGH-CURRENT CONNECTOR**

(30) Priority: 17.08.2022 DE 102022120762
(71) Applicant: TE Connectivity Germany GmbH, 64625 Bensheim (DE)
(72) Inventor: WOLFSCHMITT, Heiko, 64625 Bensheim (DE); FORELL, Richard A., 64625 Bensheim (DE); SCHNEIDER, Joachim, 64625 Bensheim (DE); SAENGER, Walter, 64625 Bensheim (DE); HULBERT, Thomas, 64625 Bensheim (DE); BALLES, Wolfgang, 64625 Bensheim (DE); EHEIM, Manuel, 64625 Bensheim (DE)
(74) Representative: Patentanwaltskanzlei WILHELM & BECK

(57) **Abstract**

The invention relates to an electrical high-current connector (10) for a high-current line (20) consisting of copper or aluminium, in particular for the automotive sector, comprising an electrically insulating connector housing (100), at least one electromagnetically shielded (136) contact device (130) and at least one clamping screw (120) for mechanically bracing an electrical contact means (110) of the contact device (130), wherein an electrically insulating protective cap (1000) of the high-current connector (10) can be provided or is provided at/on the connector housing (100), wherein at least one shielding hole (135) in an electromagnetic shield (136) of the contact device (130) can be closed and/or is closed electromagnetically by means of the protective cap (1000).

## Description

The invention relates to an electrical high-current connector for a high-current line consisting of copper or aluminium, in particular for the automotive sector. The invention also relates to an assembled electrical high-current connection and to a power-electrical entity, in particular in each case for the automotive sector.

In the electrical sector (electrics, electrical engineering, electrical power engineering etc.) beyond ground-based electrical power engineering and its analogues, a large number of electrical high-current connectors are known which serve the purpose of transmitting electrical currents and voltages in the medium-current or high-current and/or medium-voltage or high-voltage range. In this case, the high-current connectors, for example for supplying and/or distributing electrical energy in warm, possibly hot, contaminated, humid and/or chemically aggressive environments, in the short term and/or permanently must ensure problem-free transmission of electrical energy. Owing to a wide range of applications, a large number of such high-current connectors are known in the non-automotive sector and in the automotive sector.

Such high-current connectors can be installed, for example, on/in an electrical entity, for example, a rechargeable battery or a rechargeable battery module, a (traction) battery or a (traction) battery module, an inverter, a switchgear assembly etc. - Efforts to reduce environmental impact and high fuel costs make, for example in the automotive sector, hybrid or electric vehicles necessary. One aspect of these vehicles is handling of high electrical charging and operating currents and/or voltages, wherein the components in question of the vehicles need to designed correspondingly. This relates, for example, to high-current/high-voltage lines (for example stranded lines, conductor bars, busbars, etc. consisting of copper or preferably aluminium) and contact means (for example connection pieces, flat contacts, busbars etc. consisting of aluminium or preferably copper) of the high-current connectors.

In order to make electrical contact with an entity by means of a high-current connector, it is possible to use electromechanical screw contact connections which also meet stringent requirements. A mechanical path can be functionally separated from an electrical path by means of such a high-current screw contact connection. The mechanical path serves to transmit the mechanical tensile stresses of a screw fitting, in particular a steel-steel screw fitting, and the electrical path is used as a low-resistance electrical contact connection, in particular a copper-copper connection, of the high-current screw contact connection by means of the high-current connector.

As a result, a robust and, in a typical manufacturing environment, easily handleable electrical high-current connection is provided. In addition, such a high-current connection is easily separable (diagnosis, repair, recycling) and at the same time safe to touch. Such high-current connections can be used in a variety of ways and flexibly for making contact with battery modules and for other connecting points in various connection panels of an electrical power architecture. - Efforts are continually being made to improve electrical high-current connectors, in particular to design them to be more effective and in the process to make them cost-effective. It is therefore an object of the invention to specify an improved high-current connector.

The object of the invention is achieved by means of an electrical high-current connector for a high-current line consisting of copper or aluminium, in particular for the automotive sector, and by means of an assembled electrical high-current connection and a power-electrical entity, in particular in each case for the automotive sector, according to the independent claims. - Advantageous developments, additional features and/or advantages of the invention can be gleaned from the dependent claims and the following description.

Within the scope of the invention, the 'shielding holes' resulting from a screwable connection in a layer of a structure of an electrical high-current connector have proven to be a problem, depending on an application. - The high-current connector according to the invention comprises an electrically insulating connector housing, at least one electromagnetically shielded contact device and at least one clamping screw for mechanically bracing an electrical contact means of the contact device, wherein an electrically insulating protective cap of the high-current connector can be provided or is provided at/on the connector housing, wherein at least one shielding hole in an electromagnetic shield of the contact device can be closed and/or is closed electromagnetically by means of the protective cap.

The contact device may be designed for a single contact portion of a single high-current line (cf. drawing) or for a plurality of contact portions of a plurality of high-current lines, in particular precisely two contact portions of two high-current lines (not illustrated). Furthermore, depending on the number of contact portions of the high-current lines which can be accommodated in it, the contact device may or may not comprise at least one contact means; that is to say, a contact means may also be associated with a high-current line, rather than the high-current connector.

The shielding hole is arranged in this case in the contact device, in particular because a screw fitting of a contact means of the high-current connector to a mating contact means of a mating high-current connector could otherwise not be established or could be established only in a cumbersome and therefore cost-intensive manner by means of the at least one clamping screw. In addition, the high-current line may be, for example, in the form of a stranded line, a conductor line, a solid material line, a flat conductor, a conductor bar, a busbar etc. - The shielding hole in the electromagnetic shield of the contact device may be able to be closed and/or may be closed electromagnetically by means of the protective cap itself and/or by means of a shielding means of the protective cap.

On the one hand, the at least one contact device of the high-current connector may be able to be accommodated or may be accommodated in the connector housing. For this purpose, the relevant contact device can preferably be translationally moved forwards into the connector housing and is preferably guided inside the connector housing. Furthermore, the contact device and the connector housing may be designed on the inside such that the contact device can be held, arrested (shoulder) and/or secured (latching) in the connector housing.

On the other hand, the contact means of the contact device may be able to be secured to a mating contact means of a high-current mating connector by means of the clamping screw for the purpose of making electrical contact with one another and, as a result, the high-current connector may also be able to be secured to the high-current mating connector. In this case, the high-current mating connector may be a component of an electrical entity which naturally differs from the entity mentioned below since this comprises the high-current connector. Under certain circumstances, the high-current mating connector may also be a component of an assembled electrical high-current connection which likewise differs from the high-current connection mentioned below.

The protective cap may be in the form of a protective cap that is provided separately from the connector housing or may be in the form of a protective cap that is provided on the connector housing. Furthermore, the protective cap may be in the form of a protective cap which can be plugged onto the connector housing and unplugged again or may be in the form of a protective cap which can be pivoted towards the connector housing and pivoted away again. Furthermore, the protective cap and the connector housing may be mutually designed such that the protective cap can be latched to the connector housing and this latching is preferably also securable. In addition, the protective cap may be secured to the front of the connector housing, for example, by means of an additional securing means, for example a slide, in addition to the latching.

The shielding hole in the electromagnetic shield of the contact device and the protective cap in a relevant region or the shielding means may be in the form of a negative on/in the electromagnetic shield and a positive may be provided in/on the protective cap. Furthermore, these, that is to say the shielding hole and the protective cap in a relevant region or the shielding means, may be in the form of components of a shield of the high-current connector which are partially complementary to one another. In this case, the shielding means of the protective cap can be placed in the shielding hole of the shield, for example in a form-fitting manner.

Furthermore, the shielding hole and the protective cap in a relevant region or the shielding means may each have an elliptical or polygonal cross section. A substantially circular cross section, in particular, is preferred as an elliptical cross section and a substantially rectangular or square cross section, in particular, is preferred as a polygonal cross section. - The shielding means may be designed or provided so as to protrude from an inner side of the protective cap. The shielding hole may be arranged in an outer side of the contact device and the electromagnetic shield. The shielding hole may be bounded by spring lugs of the electromagnetic shield which lead inwards into the electromagnetic shield.

The shielding means of the protective cap may be in the form of a shielding plug. The protective cap and the shielding plug may be produced separately from one another. In this case, the shielding plug may be used as an insert part for a protective cap that can be produced in an injection moulding method. The shielding plug may be held on the protective cap by means of a form fit, a friction fit and/or a force fit.

The shielding plug may be held on the protective cap by means of latching, clipping and/or undercutting. Latching can be effected, for example, by means of mutually corresponding latching devices of the protective cap (latching projection) and of the shielding plug (shaping). In the case of undercutting, the protective cap is preferably designed as an insert part for an injection moulding method, wherein injection moulding compound can flow through a through-cutout or into a cutout in the protective cap, for example. Furthermore, the shielding plug may be held on the inside of the protective cap by means of a third component part.

The shielding plug may be substantially in the form of a preferably hollow cylinder at least in portions. In this case, a straight cylinder is preferred, wherein a base area of the cylinder may basically be arbitrary. However, a circular base area is preferred. In this case, a cylinder or side wall is preferably substantially closed. Furthermore, the shielding plug may be substantially closed on at least one end face wall. That is to say, the shielding plug may be in the form of a sleeve which is closed on one or both sides on its end faces.

A relevant wall of the shielding plug must be at least closed or electromagnetically tight such that the shielding plug performs its electromagnetic shielding task during the intended use of the high-current connector. That is to say, a through-cutout may possibly be arranged, for example, in the shielding plug, for example for its mounting/holding on/in the protective cap. - In this case, a side wall is parallel to an axial extent of the clamping screw (definition). In addition, an end face is at a substantially right angle to an axial extent of the clamping screw (definition).

In addition, the shielding plug may have, in its free end portion, an insertion chamfer for centring in the shielding hole. In this case, the insertion chamfer is preferably arranged at least partially circumferentially on/in the shielding plug in the circumferential direction of the shielding plug. Furthermore, the shielding plug may have, in its attached end portion, a circumferential bead for mounting on/in the protective cap.

The protective cap may be substantially closed on an upper end face. This end face forms a cover for a subsequent screw fitting of the high-current connector to a mating high-current connector. Furthermore, the protective cap may be substantially open on a lower end face. Furthermore, the protective cap may be substantially closed on a front side wall. In addition, the protective cap may be substantially open on a rear side wall. Its mechanical connection to the connector housing may be configured on the rear side wall, for example as part of a swivel joint or hinge. Furthermore, the protective cap may be substantially closed on two lateral side walls that are diametrically opposite one another.

The protective cap may be able to be brought from an open position on/remote from the connector housing into a closed position on the connector housing. During closing of the respective shielding hole, the insertion chamfer of the relevant shielding plug may centre this shielding plug in the respective shielding hole. In the closed position, the spring lugs of the electromagnetic shield at the respective shielding hole may resiliently sit on the outer circumference of the relevant shielding plug. In the closed position, the relevant end face wall of the shielding plug may substantially completely close the respective shielding hole (in the sense of at least sufficiently electromagnetically tight).

The high-current connector may be in the form of a 90° high-current connector or a 180° high-current connector. - The shielding means or the shielding plug may have a metal. In this case, the shielding plug may be formed from a metal or metal alloy or may have a metallization of a plastic body (actual shielding plug), for example. - A gap between the protective cap and the connector housing may be able to be sealed or may be sealed by means of a seal. This naturally applies to the closed position of the protective cap on the connector housing, wherein the seal may be initially preferably associated with the protective cap, but possibly also the connector housing.

The high-current connector may be designed for permanent electrical currents of at least approximately: 100 A, 200 A, 300 A, 400 A, 500 A, 750 A, 1 kA, or 1.25 kA. Furthermore, the high-current connector may be designed for electrical voltages of at least approximately: 200 V, 300 V, 400 V, 500 V, 600 V, 750 V, 1 kV, 1.25 kV, 1.5 kV, 1.75 kV or 2 kV. In this case, the high-current connector can further be configured in such a way that it can withstand in each case markedly higher, short-term, electrical currents and/or voltages (for example dynamic drive mode, possibly in each case approximately: +175%, +200%, +250%, +300%, +350%, +400%, +500%).

The high-current connector, preferably in accordance with LV 214 or an analogue, may meet the vibration requirements of the class or in accordance with the degree of severity: 2, 3 and/or 4. In particular, the vibration requirement of the class or in accordance with degree of severity 3 is met by means of the high-current connector. In addition, it may be possible for the high-current connector, for example in accordance with LV 214 or an analogue, to not meet the vibration requirements of the class or in accordance with degree of severity: 4 and/or higher. - The high-current connector is preferably designed for a use temperature of approximately -40°C to approximately: 80°C, 100°C, 120°C, 140°C, 150°C, 160°C, 170°C or 180°C.

The assembled electrical high-current connection according to the invention has an electrical high-current line and at least one electrical high-current connector according to the invention. In this case, a single longitudinal end portion or both longitudinal end portions of the high-current line can have a high-current connector according to the invention. In addition, in the first case, a second longitudinal end portion can have another high-current connector, for example a socket for an inlet etc. - The high-current connector or the high-current connection is a flexibly usable, compact, robust and/or touch-safe solution for making contact with and for connecting battery modules and further high-current connecting points apart from a battery.

In this case, the contact means may have an electrical high-current conductor of an electrical high-current line in its electrical connection portion. An electromechanical connection between the connection portion and the high-current conductor may be in the form of a two-piece connection (plug-in connection, fit joint or compression joint etc.), a one-piece connection, a materially one-piece connection or an integral connection. In the latter case, the contact means is preferably formed by the high-current conductor itself (continuation of the high-current conductor without an additional interface, preferably with reshaping of the longitudinal end portion of the high-current conductor).

Furthermore, the electromagnetic shield in this case shields, in particular, a connecting region of the contact means with the high-current conductor. The high-current connection may have precisely one or precisely two high-current connectors, in which case more than two high-current connectors may possibly also be used. - The high-current conductor can be embedded in an electromagnetically shielded high-current line. The electromagnetic shield can be in electrically conductive contact with an electromagnetic shield of the high-current line. An outer protective layer of the high-current line may be sealed with respect to the connector housing. In addition, the high-current line may also be secured to the connector housing by means of at least one latching means.

The entity according to the invention comprises an electrical high-current connector according to the invention and/or an assembled electrical high-current connection according to the invention. In this case, the entity can be in the form of, for example, a device, a means, a module, an apparatus, an installation, a system, a module of a rechargeable electric battery or of an electric battery, for example, a rechargeable electric battery or an electric battery, an inverter (for front-wheel drive and/or rear-wheel drive), a switchgear assembly, etc. In this case, the high-current connection can be arranged, for example, between two such entities.

The invention is explained in greater detail below on the basis of exemplary embodiments with reference to the appended schematic drawings which are not to scale. Portions, elements, component parts, units, components and/or diagrams which have an identical, unique or analogous configuration and/or function are identified by the same reference symbols in the description of the figures (see below), the list of reference symbols, the patent claims and in the figures (Figs) of the drawings. A possible alternative which is not explained in the description of the invention (see above), is not illustrated in the drawings and/or is not definitive, a static and/or kinematic reversal, a combination etc., with respect to the exemplary embodiments of the invention or a component, a diagram, a unit, a component part, an element or a portion thereof, can further be gleaned from the list of reference symbols and/or the description of the figures.

In the case of the invention, a feature (portion, element, component part, unit, component, function, variable etc.) can be of positive configuration, that is to say present, or of negative configuration, that is to say absent. In this specification (description (description of the invention (see above), description of the figures (see below)), list of reference symbols, patent claims, drawings), a negative feature is not explained explicitly as a feature if value is not placed on it being absent according to the invention. That is to say, the invention which is actually made and is not constructed by way of the prior art consists in omitting the said feature.

A feature of this specification can be used not only in a specified manner and/or way, but rather also in another manner and/or way (isolation, combination, replacement, addition, on its own, omission, etc.). In particular, it is possible, in the description, the list of reference symbols, the patent claims and/or the drawings, to replace, add or omit a feature in the patent claims and/or the description on the basis of a reference symbol and a feature which is assigned to it, or vice versa. Furthermore, a feature in a patent claim can be interpreted and/or specified in greater detail as a result.

The features of the description can also be interpreted as optional features (in view of the (initially mostly unknown) prior art); that is to say, each feature can be considered to be an optional, arbitrary or preferred feature, that is to say a feature which is not mandatory. Therefore, a separation of a feature, possibly including its periphery, from an exemplary embodiment is possible, it then being possible for the said feature to be transferred to a generalized inventive concept. The absence of a feature (negative feature) in an exemplary embodiment shows that the feature is optional in relation to the invention. In addition, in the case of a type term for a feature, a generic term for the feature can also be implicitly understood (possibly further hierarchical breakdown into subgenus, etc.), as a result of which a generalization of the feature is possible, for example with consideration of equivalent effect and/or equivalence.

In the merely exemplary figures (Figs):
Figs 1 and 2 show perspective exploded views of an electrical high-current connector according to the invention (Fig. 1, including high-current lines) and a connector housing for a high-current connector according to the invention (Fig. 2),
Fig. 3 shows a centrally sectioned perspective view of an assembled electrical high-current connection having a high-current connector according to the invention with its protective cap in a partially open position,
Fig. 4 shows, in a front, centrally sectioned side view which is broken away at the rear, a high-current connector according to the invention (including high-current lines) with its protective cap in a closed position, and
Fig. 5 shows an outer, non-sectioned perspective view of an assembled electrical high-current connection according to the invention, wherein the protective cap of its high-current connector is illustrated in a partially open position.

(Traction) batteries are indispensable parts of an electrification of the drive trains of hybrid or electric vehicles. Such batteries consist of many individual cells which are each combined to form battery modules. All of the electrical energy during the operating modes of charging, travelling and recuperation must safely flow into the battery or be able to be removed from the battery via high-current connections of these battery modules. Therefore, such high-current connections and their high-current contact connections must be capable, under constricted conditions in terms of physical space, of conducting permanent currents of up to 600 A and in the future even above this for several minutes during a high-power charging cycle, while in dynamic drive modes they need to carry much higher currents for seconds (at least +175% to possibly over +500%). The same applies to the electrical voltages.

In addition, such a high-current contact connection of a battery module provides a physical layer for battery protection (overtemperature protection), battery management (states of charge), cell balancing (charge balancing between battery modules), mechanical protection, etc. For this purpose, a contact connection of each individual battery module which has good fatigue strength but is preferably detachable is required. Such a contact connection not only needs to be configured as an integrated system for the life of the vehicle but also needs to be robust in such a way that vibrations and temperature influences do not influence the mechanical and electrical properties of the contact connection to an impermissible extent over the life. In addition, this contact connection needs to be safe to touch in order that no risk is posed by high electrical currents and/or voltages in a high-voltage system such as the electrified vehicle.

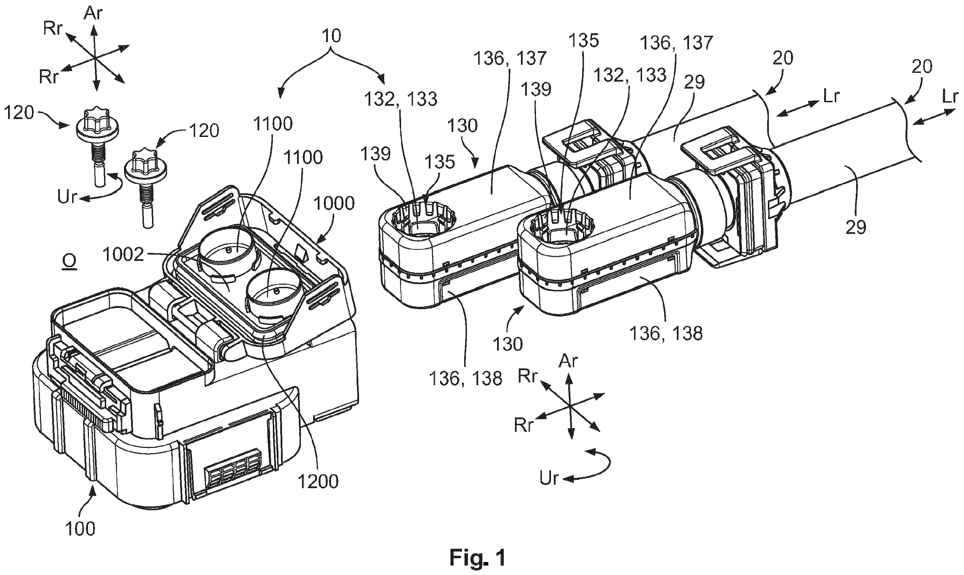

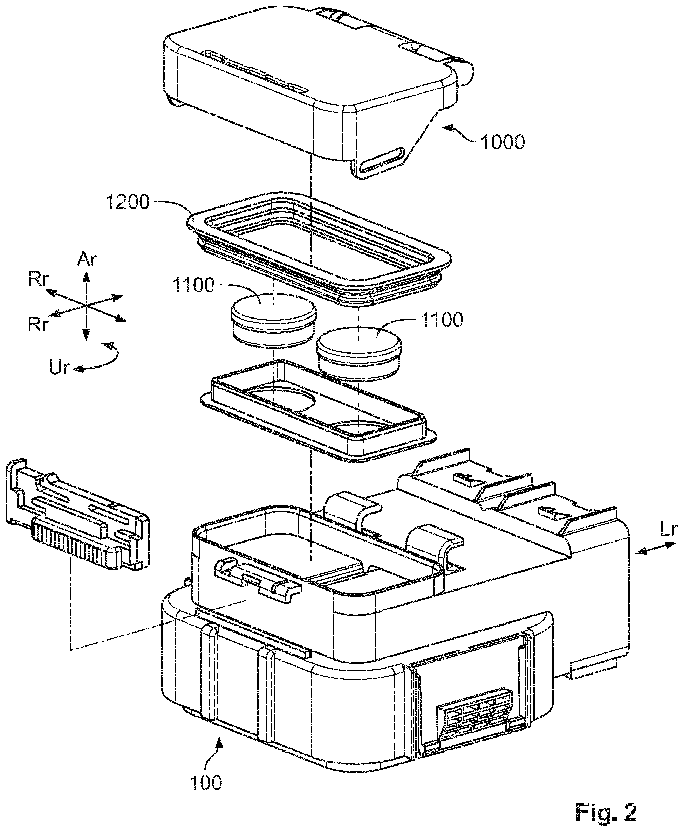

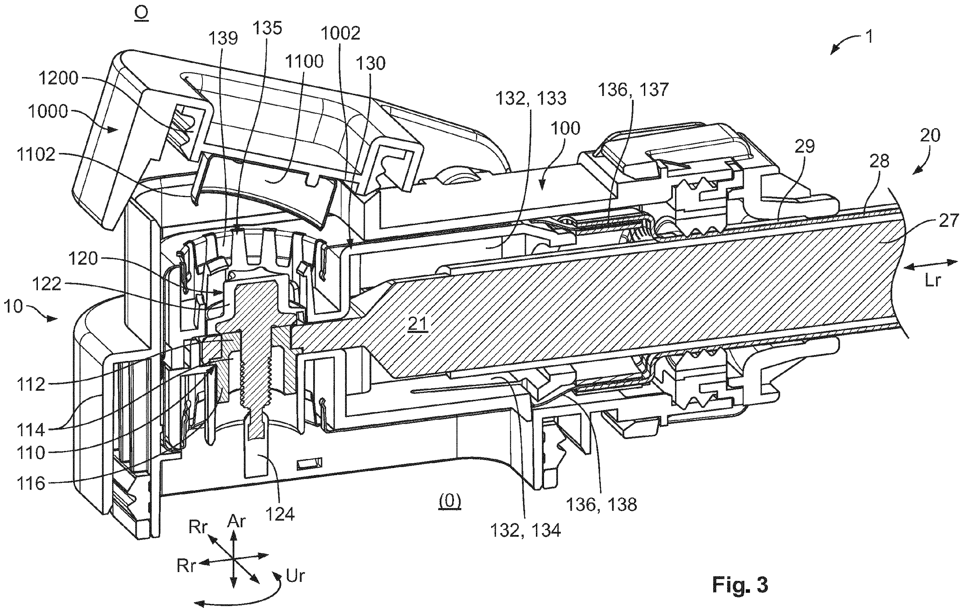

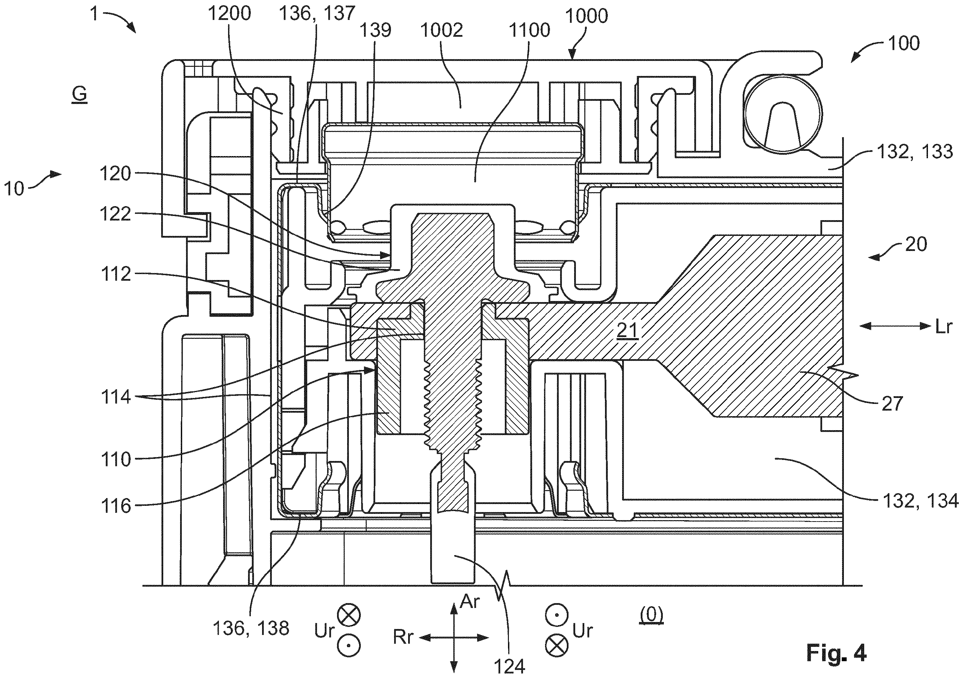

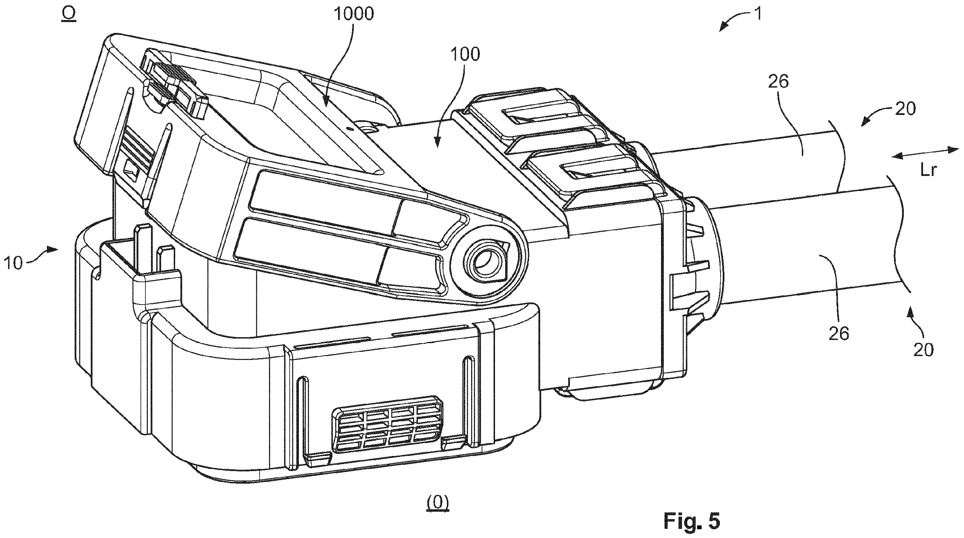

The invention is explained in greater detail below on the basis of exemplary embodiments of three embodiments (embodiment one: Fig. 1; embodiment two: Figs 2 and 4; embodiment three: Figs 3 and 5) of a variant of a high-current connector 10 according to the invention and of an assembled electrical high-current connection 1 according to the invention. In this case, the assembled high-current connection 1 may be in the form of a preassembled, partially assembled or completely assembled high-current connection 1.

Although the invention is described and illustrated further in greater detail by way of preferred exemplary embodiments, the invention is not restricted by the disclosed exemplary embodiments, but rather is of a more fundamental nature. Other variations can be derived therefrom and/or from the above (description of the invention), without departing from the scope of protection of the invention. The invention can be used in general in the electrical sector in the case of an entity (cf. above). One exception is formed here by ground-based electrical power engineering and analogues (very high to maximum electrical currents and voltages).

The drawings show only those physical sections of a subject matter of the invention which are necessary for understanding the invention. Designations such as connector and mating connector, contact means and mating contact means etc. are to be interpreted synonymously, that is to say they are possibly interchangeable in each case. The explanation of the invention with reference to the drawings refers below to a respective axial direction Ar (axial), a respective radial direction Rr (radial) and a respective circumferential direction Ur (tangential) of a clamping screw 120, of a contact means 110, of a shielding means 1100 or of a shielding plug 1100 etc., and a longitudinal direction Lr of a relevant high-current line 20 which is preferably arranged at an angle, in particular at a right angle, with respect to the relevant axial direction Ar, that is to say the longitudinal direction Ar of the clamping screw 120.

Figs 3 to 5 show an assembled high-current connection 1 (10, 20, ...; 10, 20, 10) according to the invention having at least one high-current connector 10 according to the invention and at least one electrical high-current line 20 for making contact with an electrical entity 0. For this purpose, the entity 0 has a partially complementary high-current mating connector (not illustrated) which may be arranged, for example as a plug-in socket, on the outside of entity 0. Furthermore, Fig. 1 shows the high-current connection 1 during assembly, wherein the clamping screws 120 (cf. below) may or may not be associated with the assembled high-current connection 1.

The high-current line 20 (cf. Fig. 3, in particular) preferably comprises in this case from the inside out: an electrical high-current conductor 27, electrical internal insulation, an electromagnetic shield 28 and an outer protective layer 29 (possibly in the form of electrical external insulation 29). In this case, the electromagnetic shield 28 fully surrounds the high-current conductor 27 with respect to the longitudinal direction Lr. In its free longitudinal end portion, the high-current line 20 or the high-current conductor 27 is in the form of an electromechanical contact portion 21 or contact longitudinal end portion 21.

The contact portion 21 of the high-current line 20 has an electrical contact means 110, wherein the contact means 110 may be associated with the high-current conductor 27 (as in the present case) or the high-current line 20 or the high-current connector 10 (not illustrated). In the present case (cf. Figs 3 and 4, in particular), the contact means 110 is integrated, with its electrical connection portion 112, into the contact portion 21 of the high-current conductor 27 and is preferably welded thereto (friction, laser or ultrasonic welding). It is naturally possible to use another electromechanical connection between the connection portion 112 and the high-current conductor 27 (cf. above).

The contact means 110 also has an electrical contact portion 116 having a contact-making area for a mating contact-making area of an electrical mating contact means of a mating contact device or an electrical mating contact device of a mating high-current connector. The contact means 110 also has a through-cutout 114, through which a mechanical clamping screw 120 extends when making electrical contact between the high-current connector 10 and the mating high-current connector.

The high-current connector 10 can be screwed, for example by way of a threaded sleeve of the mating high-current connector, to the mating high-current connector by means of the clamping screw 120, wherein the clamping screw 120 presses the contact-making area and the mating contact-making area against one another and in this manner establishes the electrically conductive connection between the high-current connector 10 and the mating high-current connector. In order to electrically insulate the clamping screw 120, it also preferably has only electrical insulation 122 of its head and, axially Ar opposite this, preferably has electrically insulating touch protection 124 at a free end of its screw shank.

The contact means 110 of the high-current line 20 or the contact means 110 for the high-current line 20 and the contact portion 21 of the high-current line 20 can be or are arranged in a contact device 130 of the high-current connector 10 (cf. Figs 1, 3 and 4).

The contact portion 21, including the contact means 110 (cf. Figs 3 and 4, in particular), is accommodated, in particular, in an insulation body 132 of the contact device 130, wherein the insulation body 132 is preferably configured for an individual contact portion 21. It is naturally possible to configure the insulation body 132 for a plurality of, in particular two, contact portions of a high-current line. In the present case, the insulation body 132 has two insulation parts 133, 134 which can be or are plugged together, for example an upper insulation part 133 and a lower insulation part 134. It is naturally possible to use a different configuration of the insulation body 132.

The insulation body 132 is surrounded by an electromagnetic shield 136. In the present case, the electromagnetic shield 136 has two shielding parts 137, 138 or shielding plates 137, 138 which can be or are plugged together, for example an upper shielding plate 137 and a lower shielding plate 138. It is naturally possible to use a different configuration of the electromagnetic shield 136. - The contact device 130 and therefore both the insulation body 132 (upper insulation part 133) and the electromagnetic shield 136 (upper shielding plate 137) have an opening (through-cutout) so that the clamping screw 120 can be placed in the contact device 130.

As a result, the electromagnetic shield 136, and in particular the upper shielding plate 137 there, gains a necessary but undesirable shielding hole 135. In this case, the shielding hole 135 in the electromagnetic shield 136, which leads into the insulation body 132, is bounded by inwardly running spring lugs 139 of the electromagnetic shield 136. In this case, the spring lugs 139 preferably lead into an opening of the insulation body 132, in particular into a cutout or through-cutout of the upper insulation part 133.

At least one such shielded contact device 130 can be accommodated or is accommodated in an electrically insulating connector housing 100 of the high-current connector 10 (cf. also above); in the present case, there are two such contact devices 130. In this case, in addition to the connector housing 100 and the at least one shielded contact device 130, the high-current connector 10 preferably comprises at least one clamping screw 120 for mechanically bracing the high-current connector 10 (or its contact means 110) to the mating high-current connector (or its mating contact means). Use is preferably made of as many clamping screws 120 as electrical contact connections that need to be established to the high-current connector 10.

The connector housing 100 of the high-current connector 10 has an associated electrically insulating protective cap 1000 which is provided on the connector housing 100, in particular such that it can be pivoted by means of a swivel joint or hinge. However, it is also possible for the protective cap 1000 to be in the form of a protective cap 1000 that is provided separately from the connector housing 100 (not illustrated). In the first exemplary embodiment, the protective cap 1000 is in the form of a protective cap 1000 which which can be pivoted towards the connector housing 100 and pivoted away again and, in the second exemplary embodiment, is in the form of a protective cap 1000 which can be plugged onto the connector housing 100 and unplugged again.

In this case, the protective cap 1000 can be brought from an open position O on (one-part exemplary embodiment) or remote from (two-part exemplary embodiment) the connector housing 100 into a closed position G on/in the connector housing 100. For the closed position G, the protective cap 1000 can preferably be latched to the connector housing 100, wherein this latching is possibly securable. - According to the invention, the at least one shielding hole 139 can be closed at least electromagnetically by means of the protective cap 1000.

This can be carried out by means of the protective cap 1000 itself (not illustrated) or by means of a shielding means 1100 of the protective cap 1000. In this case, the respective shielding hole 135 in the electromagnetic shield 136 of the contact device can be closed (open position O) or is closed (closed position G) by the protective cap 1000 itself and/or a relevant shielding means 1100 of the protective cap 1000. If present, the shielding means 1100 preferably protrudes from an inner side 1002 of the protective cap 1000.

In particular, the relevant shielding means 1100 of the protective cap 1000 is in the form of a shielding plug 1100 that is separate from the protective cap 1000. The shielding plug 1100 is preferably formed from a metal or a metal alloy or may be in the form of a metallized body, in particular in the form of a metallized plastic body. - The shielding plug 1100 is formed such that it closes the relevant shielding hole 139 at least electromagnetically in the closed position G of the protective cap 1000 on the connector housing 100.

In the present case, cf. Figs 1 to 4, the preferably metallic shielding plug 1100 is in the form of a cylinder which is shorter than its diameter or radius and is preferably hollow and is substantially closed on an end face wall (sleeve closed on one side on an end face). The shielding plug 1100 preferably has, in its attached end portion, a circumferential bead for mounting on/in the protective cap 1000. In addition, in its free end portion, the shielding plug 1100 preferably has an insertion chamfer 1102 which is directed radially Rr inwards. In order to accommodate the shielding means 1100 or the shielding plug 1100, the protective cap 1000 has a receptacle for the shielding means 1100 or the shielding plug 1100 on its inner side 1002. In this case, the receptacle may be formed in such a manner that the shielding means 1100 or the shielding plug 1100 can be latched and/or clipped to/in the receptacle. Other configurations of the receptacle and ways of securing the shielding means 1100 or the shielding plug 1100 to/in the receptacle can naturally be used (cf. above).

The protective cap 1000 may be in the form of a trough or partial trough (cf. above), wherein its inner side 1002 is freely accessible at least in portions (that is to say in the case of a protective cap 1000 alone). In this case, it is preferred for the protective cap 1000 to have a seal 1200 on/in an inner edge extending in a substantially axial Ar manner, which seal can be used to seal the protective cap 1000 with respect to the connector housing 100.

The assembled high-current connection 1 is illustrated, in particular, in Figs 3 to 5, wherein at least one electrical high-current line 20 is connected to at least one electrical high-current connector 10 (cf. above). In the present case, two high-current lines 20 are connected to a single high-current connector 10, wherein the electromagnetic shield 136 shields a connecting region of the contact means 110 with the high-current conductor 27. In this case, the electromagnetic shield 136 of the high-current connector 10 is in electrically conductive contact with the electromagnetic shield 28 of the high-current line 20 (cf. Fig. 3). This contact preferably runs completely around the high-current line 20 on/in the contact portion 21.

### List of reference symbols

0 electrical entity
1 assembled (electrical) high-current connection
10 (electrical) high-current connector
20 (electrical) high-current line
21 (electromechanical) contact (longitudinal end) portion of the high-current line 20 27 (electrical) high-current conductor
28 (electromagnetic) shield
29 (electrically insulating) outer protective layer
100 (electrically insulating) connector housing
1000 (electrically insulating) protective cap
1002 inner side of the protective cap 1000
1100 (electromagnetic) shielding means, in particular shielding plug
1102 insertion chamfer
1200 seal
110 (electrical) contact means
112 (electrical) connection portion
114 through-cutout
116 (electrical) contact portion
120 (mechanical) clamping screw
122 electrical insulation of the head
124 (electrically insulating) touch protection
130 contact device with/without contact means 110, possibly with/without contact portion 21
132 insulation body
133 insulation part, for example upper insulation part
134 insulation part, for example lower insulation part
135 shielding hole
136 (electromagnetic) shield
137 shielding part/plate, for example upper shielding plate
138 shielding part/plate, for example lower shielding plate
139 spring lug
G closed position of the protective cap 1000
O open position of the protective cap 1000
Lr longitudinal direction of the high-current line 20
Ar axial direction of the clamping screw 120 etc.
Rr radial direction the clamping screw 120 etc.
Ur circumferential direction of the clamping screw 120 etc.

## Claims

1. Electrical high-current connector (10) for a high-current line (20) consisting of copper or aluminium, in particular for the automotive sector, comprising
an electrically insulating connector housing (100), at least one electromagnetically shielded (136) contact device (130) and at least one clamping screw (120) for mechanically bracing an electrical contact means (110) of the contact device (130), **characterized in that**
an electrically insulating protective cap (1000) of the high-current connector (10) can be provided or is provided at/on the connector housing (100), wherein at least one shielding hole (135) in an electromagnetic shield (136) of the contact device (130) can be closed and/or is closed electromagnetically by means of the protective cap (1000).

2. Electrical high-current connector (10) according to the preceding claim, **characterized in that** the shielding hole (135) in the electromagnetic shield (136) of the contact device (130) can be closed and/or is closed electromagnetically by means of the protective cap (1000) itself or by means of a shielding means (1100) of the protective cap (1000).

3. Electrical high-current connector (10) according to one of the preceding claims, **characterized in that**, on the one hand, the at least one contact device (130) of the high-current connector (10) can be accommodated or is accommodated in the connector housing (100), and,
on the other hand, the contact means (110) of the contact device (130) can be secured to a mating contact means of a high-current mating connector by means of the clamping screw (120) for the purpose of making electrical contact with one another and, as a result, the high-current connector (10) can also be secured to the high-current mating connector.

4. Electrical high-current connector (10) according to one of the preceding claims, **characterized in that**:
□ the protective cap (1000) is in the form of a protective cap (1000) that is provided separately from the connector housing (100) or is in the form of a protective cap (1000) that is provided on the connector housing (100),
□ the protective cap (1000) is in the form of a protective cap (1000) which can be plugged onto the connector housing (100) and unplugged again or is in the form of a protective cap (1000) which can be pivoted towards the connector housing (100) and pivoted away again, and/or
□ the protective cap (1000) and the connector housing (100) are mutually designed such that the protective cap (1000) can be latched to the connector housing (100) and this latching is preferably also securable.

5. Electrical high-current connector (10) according to one of the preceding claims, **characterized in that** the shielding hole (135) in the electromagnetic shield (136) of the contact device (130) and the protective cap (1000) in a relevant region or the shielding means (1100):
□ is/are in the form of a negative on/in the electromagnetic shield (136) and a positive is provided in/on the protective cap (1000, 1100),
□ is/are in the form of components (135, 1100) of a shield of the high-current connector (10) which are partially complementary to one another, and/or
□ each has/have an elliptical or polygonal cross section.

6. Electrical high-current connector (10) according to one of the preceding claims, **characterized in that**:
□ the shielding means (110) is designed or provided so as to protrude from an inner side (1002) of the protective cap (1000),
□ the shielding hole (135) is arranged in an outer side of the contact device (130) and the electromagnetic shield (136), and/or
□ the shielding hole (135) is bounded by spring lugs (139) of the electromagnetic shield (136) which lead inwards into the electromagnetic shield (136).

7. Electrical high-current connector (10) according to one of the preceding claims, **characterized in that** the shielding means (1100) of the protective cap (1000) is in the form of a shielding plug (1100), wherein:
□ the protective cap (1000) and the shielding plug (1100) are produced separately from one another,
□ the shielding plug (1100) is held on the protective cap (1000) by means of a form fit, a friction fit and/or a force fit, and/or
□ the shielding plug (1100) is held on the protective cap (1000) by means of latching, clipping and/or undercutting.

8. Electrical high-current connector (10) according to one of the preceding claims, **characterized in that** the shielding plug (1100):
□ is substantially in the form of a preferably hollow cylinder at least in portions,
□ is substantially closed on at least one end face wall,
□ has, in its free end portion, an insertion chamfer (1102) for centring in the shielding hole (135), and/or
□ has, in its attached end portion, a circumferential bead for mounting on/in the protective cap (1000).

9. Electrical high-current connector (10) according to one of the preceding claims, **characterized in that** the protective cap (1000):
□ is substantially closed on an upper end face,
□ is substantially open on a lower end face,
□ is substantially closed on a front side wall,
□ is substantially open on a rear side wall, and/or
□ is substantially closed on two lateral side walls that are diametrically opposite one another.

10. Electrical high-current connector (10) according to one of the preceding claims, **characterized in that** the protective cap (1000) can be brought from an open position (O) on/remote from the connector housing (100) into a closed position (G) on the connector housing (100), wherein:
□ during closing of the respective shielding hole (135), the insertion chamfer (1102) of the relevant shielding plug (1100) centres this shielding plug (1100) in the respective shielding hole (135),
□ in the closed position (G), the spring lugs (139) of the electromagnetic shield (136) at the respective shielding hole (135) resiliently sit on the outer circumference of the relevant shielding plug (1100), and/or
□ in the closed position (G), the relevant end face wall of the shielding plug (1100) substantially completely closes the respective shielding hole (135).

11. Electrical high-current connector (10) according to one of the preceding claims, **characterized in that** the high-current connector (10):
□ is designed for permanent electrical currents of at least approximately: 100 A, 200 A, 300 A, 400 A, 500 A, 750 A, 1 kA, or 1.25 kA,
□ is designed for electrical voltages of at least approximately: 200 V, 300 V, 400 V, 500 V, 600 V, 750 V, 1 kV, 1.25 kV, 1.5 kV, 1.75 kV or 2 kV, and/or
0 preferably in accordance with LV 214 or an analogue, meets the vibration requirements of the class or in accordance with the degree of severity: 2, 3 and/or 4.

12. Assembled electrical high-current connection (1), in particular for the automotive sector, **characterized in that**
the high-current connection (1) has an electrical high-current line (20) and at least one electrical high-current connector (10) according to one of the preceding claims.

13. Assembled electrical high-current connection (1) according to the preceding claim, **characterized in that**:
□ the contact means (110) has an electrical high-current conductor (27) of an electrical high-current line (20) in its electrical connection portion (112),
□ the electromagnetic shield (136) shields a connecting region of the contact means (110) with the high-current conductor (27), and/or
□ the high-current connection (1) has precisely one or precisely two high-current connectors (10).

14. Assembled electrical high-current connection (1) according to the preceding claim, **characterized in that**:
□ the high-current conductor (27) is embedded in an electromagnetically shielded high-current line (20),
□ the electromagnetic shield (136) is in electrically conductive contact with an electromagnetic shield (28) of the high-current line (20),
□ an outer protective layer (29) of the high-current line (20) is sealed with respect to the connector housing (100), and/or
□ the high-current line (20) is secured to the connector housing (100) by means of at least one latching means.

15. Power-electrical entity for the automotive sector, **characterized in that**
the entity has an electrical high-current connector (10) and/or an assembled electrical high-current connection (1) according to one of the preceding claims.
